# EUROPÄISCHE PATENTSCHRIFT

(11) **EP 1 170 152 B1**
(45) Veröffentlichungstag und Bekanntmachung des Hinweises auf die Patenterteilung: **04.10.2006**
(21) Anmeldenummer: 01114204.9
(22) Anmeldetag: 12.06.2001
(51) Int. Cl.: B60C 11/12, B60C 11/11

(54) **Fahrzeugreifen**
Pneumatic tyre
Bandage pneumatique

(30) Priorität: 06.07.2000 DE 10032372
(43) Veröffentlichungstag der Anmeldung: 09.01.2002
(73) Patentinhaber: Continental Aktiengesellschaft, 30165 Hannover (DE)
(72) Erfinder: Peda, Karl, 31515 Wunstorf (DE); Rodewald, Helmut, 31249 Hohenhameln (DE)

(56) Entgegenhaltungen:
- EP-A- 0 788 899
- EP-A- 0 970 822
- DE-A- 3 109 733
- DE-A- 4 007 760
- DE-A- 19 650 655
- US-A- 4 934 424

## Beschreibung

Die Erfindung betrifft einen Fahrzeugreifen mit einem Laufstreifen mit Profilpositiven, beispielsweise Profilblöcken, die innerhalb von gleichartigen Pitches unterschiedlicher Längen angeordnet sind, unterschiedliche Umfangslängen aufweisen und mit Einschnitten einer Breite von 0,4 mm bis 1 mm versehen sind.

Es ist üblich, zum Vermindern bzw. zur günstigen Beeinflussung des Rollgeräusches von Reifen deren Laufstreifen so zu gestalten, dass ihre Profilpositive in über den Reifenumfang aufeinander folgenden, gleichartigen Profilabschnitten, so genannten Pitches, angeordnet sind, die unterschiedliche Umfangslängen aufweisen. In Pitches mit größerer Umfangslänge weisen üblicherweise auch die Profilpositive eine größere Umfangslänge auf. Im Allgemeinen werden die Profilpositive in Pitches mit drei bis fünf unterschiedlichen Umfangslängen angeordnet, wobei das Längenverhältnis der Pitches vorab festgelegt wird und mittels eines Rechenprogrammes die günstigste Aufeinanderfolgen der Pitches über den Reifenumfang, die so genannte Pitchfolge, ermittelt wird.

Insbesondere bei PKW-Winterreifen ist es ferner üblich, den Laufstreifen durch Einschnitte aufzuweichen. Um sowohl den Profilpositiven mit kleinerer als auch jenen mit größerer Umfangslänge eine möglichst übereinstimmende Profilsteifigkeit zu verleihen, ist es dabei auch üblich, in den kürzeren Profilpositiven weniger Einschnitte vorzusehen als in den längeren. Ein Reifen mit einem derart ausgeführten Laufstreifen ist beispielsweise aus der AT-B 404 341 bekannt. Eine gleichmäßige Profilsteifigkeit sollte, wenn nicht über den gesamten Profilumfang, zumindest innerhalb bestimmter, in Umfangsrichtung verlaufender Profilbereiche gegeben sein, um einen möglichst gleichmäßigen Abrieb des Laufstreifens sicherzustellen.

In der EP-A-0 970 822 wird zur Verbesserung des Reifen-/Fahrbahngeräusches eine besondere Auslegung einer Pitchfolge vorgeschlagen, wobei in Pitches größerer Umfangslängen breitere Quernuten bzw. Sacknuten und in Pitches kleinerer Umfangslängen schmälere Quernuten und Sacknuten vorgesehen sind. Die DE 3109733 A offenbart einen Laufstreifen für einen nur für begrenzte Zeit einzusetzenden Reservereifen, bei dem die Hälfte des Umfanges mit einem Profilmustern mit großer Schrittlänge und die andere Hälfte mit einem Profilmuster mit kleiner Schrittlänge versehen ist. Beim Abrollen des Reifens entstehen derart ein hoher und ein tiefer Ton, wodurch ein erkennbares und deutlich hörbares Warnsignal entsteht. Auch hier ist die übliche Maßnahme, in Pitches größerer Umfangslängen breitere Quernuten bzw. Sacknuten und in Pitches kürzerer Umfangslängen schmälere Quernuten bzw. Sacknuten vorzusehen, getroffen. Aus der DE 109 50 655 A ist es bekannt, in einem Laufstreifen Einschnitte unterschiedlicher Breiten vorzusehen. Dabei werden in den Profilelementen in den Schulterbereichen Einschnitte angeordnet, die weniger breit sind als jene in den Profilelementen im Mittelbereich des Laufstreifens. Durch diese Maßnahme soll der Abrieb über die Axialerstreckung des Laufstreifens vergleichmäßigt werden.

Der Erfindung liegt die Aufgabe zu Grunde, eine weitere und/oder zusätzliche, sehr einfache Möglichkeit zur Beeinflussung der Steifigkeit von Profilpositiven im Laufstreifen aufzufinden, um die Aufweichung gezielter beeinflussen zu können.

Gelöst wird die gestellte Aufgabe erfindungsgemäß dadurch, dass in den Profilpositiven größerer Umfangslänge Einschnitte mit einer größeren Breite vorgesehen sind, als in Profilpositiven geringerer Umfangslänge.

Gemäß der Erfindung kann die durch die Einschnitte bedingte Aufweichung der Profilpositive sehr gezielt und auf einfache Weise durch eine Variation der Breite der Einschnitte beeinflusst werden. Damit steht dem Reifenkonstrukteur eine weitere Maßnahme zur Anpassung oder Bestimmung des Ausmaßes der Aufweichung eines Laufstreifens zur Verfügung.

Dabei kann, wie es in Anspruch 2 gekennzeichnet ist, die Anzahl der Einschnitte in einem Profilpositiv größerer Umfangslänge mit der Anzahl der Einschnitte in einem Profilpositiv kleinerer Umfangslänge übereinstimmen, oder es kann, gemäß Anspruch 3, die Anzahl der Einschnitte in einem Profilpositiv größerer Umfangslänge größer sein als die Anzahl der Einschnitte in einem Profilpositiv kleinerer Umfangslänge. Je nach der Struktur des Profils des Laufstreifens und je nach dem gegebenen Verhältnissen zwischen den Umfangslängen der Profilpositive kann die eine oder andere Maßnahme günstig sein.

Gemäß Anspruch 4 können in einem Profilpositiv die breiteren Einschnitte mit Einschnitten geringerer Breite kombiniert sein. Auch diese Maßnahme erlaubt es, gezielt auf die Steifigkeit bzw. Aufweichung eines Profilpositivs Einfluss zu nehmen und wird insbesondere in Abhängigkeit vom Verlauf der Einschnitte innerhalb des Profilpositivs getroffen werden.

Die Erfindung wird nachfolgend anhand der Zeichnung, die schematisch zwei Ausführungsbeispiele der Erfindung darstellt, näher beschrieben. Dabei zeigen
Fig. 1 anhand einer Draufsicht auf eine Teilabwicklung eines Laufstreifens eines Fahrzeugreifens eine erste grundsätzliche Ausführungsform der Erfindung und
Fig. 2 eine weitere Ausführungsform der Erfindung anhand der Draufsicht auf eine Teilabwicklung eines anders gestalteten Laufstreifens eines Reifens.

Die vorliegende Erfindung befasst sich mit einer speziellen Ausgestaltung von Einschnitten in den Profilpositiven eines Laufstreifens in Abhängigkeit von der Umfangslänge der Profilpositive bzw. von Pitchlängen. Aus diesem Grund werden vorab die in der Figurenbeschreibung verwendeten Begriffe Pitch, Länge eines Pitch und Pitchfolge erläutert. Unter Pitch wird ein Profilschritt bzw. ein Profilabschnitt verstanden, wobei eine Aneinanderreihung einer Vielzahl von Pitches über den Reifenumfang den Laufstreifen ergibt. In einem Laufstreifen mit in Umfangsreihen angeordneten Blöcken besteht ein Pitch aus je einem Block aus jeder Reihe von Blöcken und einer der an diese anschließenden Quernuten. Üblicherweise sind sämtliche Profilschritte bzw. Pitches, aus welchen sich ein Laufstreifen zusammensetzt, zumindest im Wesentlichen gleichartig gestaltet, werden jedoch in verschiedenen Umfangslängen gewählt. Ein Laufstreifen für einen PKW-Reifen wird im Allgemeinen aus zwei bis fünf Pitches unterschiedlicher Länge zusammengesetzt. Die für die Art des entstehenden Reifen/Fahrbahngeräusch verantwortliche Aufeinanderfolge dieser Pitches, die Pitchfolge, wird üblicherweise Rechner unterstützt ermittelt. Die in den Zeichnungsfiguren 1 und 2 dargestellten Ausführungsformen von Laufstreifen zeigen jeweils Pitches P1, P2 mit zwei unterschiedlichen Längen L1 und L2, wobei L1 <L2.

Von dieser Anmeldung umfasste Einschnitte können bezüglich der Umfangs- oder Querrichtung des Laufstreifens beliebig ausgerichtet sein, sie können einen beliebigen Verlauf, beispielsweise einen geraden, einen wellen- oder zickzackförmigen Verlauf, aufweisen und sie können innerhalb der Profilpositive, wo sie verlaufen, ein- oder beidseitig oder gar nicht in Nuten oder dergleichen einmünden.

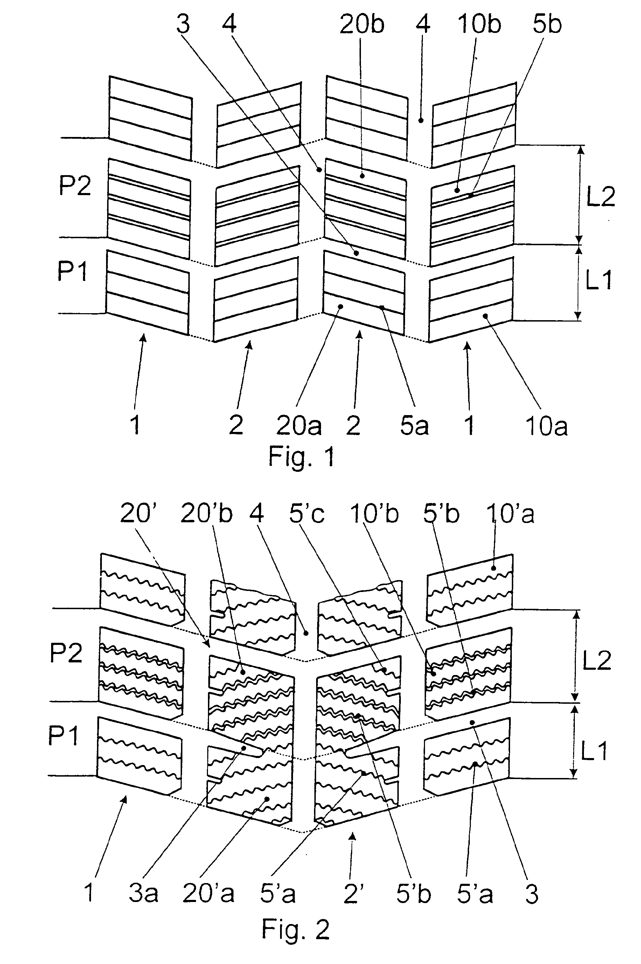

Der in Fig. 1 dargestellte Laufstreifen weist ein Profil auf, welches sich in vier Blockreihen 1, 2 gliedert, jeweils eine schulterseitig verlaufende Schulterblockreihe 1 und zwei den mittleren Bereich des Laufstreifens bildende mittlere Blockreihen 2.

Die Gliederung in die Blockreihen 1, 2 erfolgt durch drei Umfangsnuten 4 und durch eine Vielzahl von Quernuten 3. Das dargestellte Pitch P1 umfasst je einen Block 10a, 20a aus den Blockreihen 1, 2, das Pitch P2 je einen Block 10b, 20b aus diesen Blockreihen. Zu jedem Pitch P1, P2 gehört ferner eine der in Umfangsrichtung anschließenden Quernuten 3. Die Pitchgrenzen verlaufen daher entlang von Blockkanten und durchqueren die Umfangsnuten 4, was strichliert eingezeichnet ist. Der Unterschied zwischen den Umfangslängen L1 und L2 der Pitches P1, P2 resultiert zumindest aus einer unterschiedlichen Umfangslänge der den Pitches P1, P2 zugeordneten Blöcke 10a, 10b, 20a, 20b, sodass im Pitch P2 der Länge L2 die jeweiligen Blöcke 10b, 20b ebenfalls länger sind. Im Pitch P2 mit der größerer Umfangslänge L2 ist auch die Breite der Quernuten 3 etwas größer. Dies muss jedoch nicht sein.

Die zu einem Pitch P1 der Länge L1 gehörenden Blöcke 10a, 20b weisen jeweils zwei Einschnitte 5a auf, die bei der dargestellten Ausführungsform die Blöcke 10a, 20b parallel zu den Blockkanten, die von den Quernuten 3 begrenzt sind, durchqueren. Die einem Pitch P2 der Länge L2 zugeordneten Blöcke 10b, 20b sind jeweils mit drei, parallel zu ihren von Quernuten 3 begrenzten Blockkanten verlaufenden Einschnitten 5b versehen. Dabei weisen die Einschnitte 5a in den Blöcken 10a, 20a innerhalb der Pitches P1 eine Breite auf, die geringer ist als die Breite der Einschnitte 5b in den Blöcken 10b, 20b, die innerhalb der Pitches P2 verlaufen. Die Breite der schmäleren Einschnitte 5a beträgt ca. 0,5 mm, die Breite der dickeren Einschnitte 5b ca. 0,8 mm. Diese Breiten können in einem Bereich variiert werden, für die schmäleren Einschnitte 5a insbesondere zwischen 0,4 und 0,6 mm, für die breiteren Einschnitte 5' insbesondere zwischen 0,7 und 1 mm.

Bei der in Fig. 2 gezeigten Ausführungsform der Erfindung weist der dargestellte Laufstreifen ebenfalls zwei Schulterblockreihen 1 und zwei mittlere Blockreihen 2' auf, in welchen jeweils zwei in Umfangsrichtung aufeinander folgende Blockteile 20'a, 20'b zu einem Doppelblock 20' zusammen gefasst sind. Somit verläuft nur jede zweite Quernut 3 bis zur mittleren Umfangsnut 4, die weiteren Quernuten 3 enden als Sacknuten 3a innerhalb der Doppelblöcke 20'. Die im Pitch P2 mit der größerer Umfangslänge verlaufenden längeren Schulterblöcke 10'b sind mit jeweils drei wellenförmig verlaufenden Einschnitten 5'b, die Blöcke 10'a in den Pitches P1 mit kürzerer Umfangslänge sind mit zwei Einschnitten 5'a versehen. Auch bei dieser Ausführungsform sind in den Schulterblöcken 10'a die Einschnitte 5'a schmäler als die Einschnitte 5'b in den längeren Blöcken 10'b.

Die Doppelblöcke 20' gehören, wie es auch die eingezeichneten Pitchgrenzen zeigen, mit ihrem Blockteil 20'b zu einem Pitch P2 mit größerer und mit ihrem anderen Blockteil 10'a zu einem Pitch P1 mit geringerer Umfangslänge. Die Doppelblöcke 20' sind mit wellenförmig verlaufenden Einschnitten 5'a, 5'b, 5'c versehen, deren Erstreckungsrichtung hier derart gewählt ist, dass sie gegensinnig zu den Quernuten 3 bzw. den Sacknuten 3a ausgerichtet sind. Dadurch kann ihre Anzahl bei gleichem gegenseitigem Abstand größer gewählt werden als bei einem Verlauf parallel zu den Quernuten 3 bzw. Sacknuten 3a. Im Blockteil 20'a, welches zu einen Pitch P1 mit kürzerer Umfangslänge gehört, sind fünf wellenförmig verlaufende Einschnitte 5'a, die sämtlich schmal ausgeführt sind, angeordnet. Im Blockteil 20'b, welches zu einem Pitch P2 größerer Umfangslänge gehört, sind sechs wellenförmig verlaufende Einschnitte 5'b, 5'c vorgesehen, von welchen die vier mittleren Einschnitte 5'b breitere Einschnitte sind. Die beiden äußeren Einschnitte 5'c sind, wie die Einschnitte 5'a im anderen Blockteil 20'a, schmal ausgeführt. Diese Maßnahme kann günstig sein, um eine zu große Aufweichung des Profilpositivs bzw. Profilblocks durch Einschnitte, die in etwas schmäleren Blockbereichen verlaufen, zu vermeiden.

Gemäß einer nicht dargestellten weiteren Ausführungsform der Erfindung kann die Anzahl der Einschnitte in einem Profilpositiv, welches zu einem Pitch mit größerer Umfangslänge gehört, mit der Anzahl der Einschnitte in einem Profilpositiv, welches zu einem Pitch kleinerer Umfangslänge gehört, übereinstimmen, wobei vorzugsweise sämtliche Einschnitte in den Blöcken bzw. Profilpositiven mit einer größeren Umfangslänge breiter sind als die Einschnitte in den Profilpositiven bzw. Blöcken mit kleinerer Umfangslänge. Diese Maßnahme wird insbesondere dann getroffen werden, wenn die Längenunterschiede zwischen den Profilpositiven nicht sehr groß sind.

Durch die Erfindung kann somit die Steifigkeit der Profilpositive beeinflusst werden, insbesondere als eine zusätzliche Maßnahme zur oder an Stelle der üblichen Anpassung der Einschnittanzahl an die jeweilige Pitchlänge bzw. Umfangslänge der Profilpositive. Die Erfindung stellt daher eine weitere Möglichkeit zur Verfügung, mit der auf die Verformung der Profilpositive unter Belastung Einfluss genommen werden kann. Die durch die Pitchlängenvariation gegebene unterschiedliche Steifigkeit bzw. Verformbarkeit von größeren und kleineren Profilpositiven kann besser und gezielter ausgeglichen werden, als dies bei einer Variation der Einschnittanzahl möglich ist.

Die Erfindung ist mit besonderem Vorteil bei Laufstreifen für PKW-Winterreifen einsetzbar, die üblicherweise mit einer Vielzahl von Einschnitten versehen werden.

Die Erfindung ist ferner auf die dargestellten und beschriebenen Ausführungen nicht eingeschränkt. Erfindungsgemäß ausgeführte Laufstreifen können als Profilpositive auch über den Umfang umlaufende Laufstreifenbänder aufweisen, die beispielsweise durch Sacknuten strukturiert sein können. Die Einschnitte in einem Profilpositiv können variierende Tiefe und/oder unterschiedliche gegenseitige Abstände und/oder unterschiedliche Breiten aufweisen.

## Patentansprüche

1. Fahrzeugreifen mit einem Laufstreifen mit Profilpositiven, beispielsweise Profilblöcken, die innerhalb von Pitches unterschiedlicher Längen angeordnet sind, unterschiedliche Umfangslängen aufweisen und mit Einschnitten einer Breite von 0,4 mm bis 1 mm versehen sind,
**dadurch gekennzeichnet,**
**dass** in den Profilpositiven (10b, 20b, 10'b, 20'b) größerer Umfangslänge Einschnitte (5b, 5'b) mit einer größeren Breite vorgesehen sind als in Profilpositiven (10a, 20a, 10'a, 20'a) geringerer Umfangslänge.

2. Fahrzeugreifen nach Anspruch 1, **dadurch gekennzeichnet, dass** die Anzahl der Einschnitte (5b, 5'b, 5'c) in einem Profilpositiv (10b, 20b, 10'b, 20'b) mit größerer Umfangslänge mit der Anzahl der Einschnitte (5a, 5'a) in einem Profilpositiv (10a, 20a, 10'a, 20'a) kleinerer Umfangslänge übereinstimmt.

3. Fahrzeugreifen nach Anspruch 1, **dadurch gekennzeichnet, dass** die Anzahl der Einschnitte (5b, 5'b, 5'c) in einem Profilpositiv (10b, 20b, 10'b, 20'b) mit größerer Umfangslänge größer ist als die Anzahl der Einschnitte (5a, 5'a) in einem Profilpositiv (10a, 20a, 20'a, 20'a) mit kleinerer Umfangslänge.

4. Fahrzeugreifen nach einem der Ansprüche 1 bis 3, **dadurch gekennzeichnet, dass** innerhalb eines Profilpositivs (20'b) die breiten Einschnitten (5'b) mit Einschnitten (5'c) geringerer Breite kombiniert sind.

## Claims

1. Vehicle tyre with a tread rubber with positive profiles, for example profile blocks, which are arranged within pitches of different lengths, have different circumferential lengths and are provided with sipes of a width of from 0.4 mm to 1 mm, **characterized in that** sipes (5b, 5'b) with a greater width are provided in the positive profiles (10b, 20b, 10'b, 20'b) of greater circumferential length than in positive profiles (10a, 20a, 10'a, 20'a) of lesser circumferential length.

2. Vehicle tyre according to Claim 1, **characterized in that** the number of sipes (5b, 5'b, 5'c) in a positive profile (10b, 20b, 10'b, 20'b) with greater circumferential length coincides with the number of sipes (5a, 5'a) in a positive profile (10a, 20a, 10'a, 20'a) of smaller circumferential length.

3. Vehicle tyre according to Claim 1, **characterized in that** the number of sipes (5b, 5'b, 5'c) in a positive profile (10b, 20b, 10'b, 20'b) of greater circumferential length is greater than the number of sipes (5a, 5'a) in a positive profile (10a, 20a, 10'a, 20'a) of smaller circumferential length.

4. Vehicle tyre according to one of Claims 1 to 3, **characterized in that**, within a positive profile (20'b), the wide sipes (5'b) are combined with sipes (5'c) of smaller width.

## Revendications

1. Bandage pneumatique pour véhicule comprenant une bande de roulement avec des profils positifs, par exemple des blocs profilés, qui sont disposés à l'intérieur de pas de différentes longueurs, présentent des longueurs périphériques différentes et sont pourvus d'entailles d'une largeur de 0,4 mm à 1 mm,
**caractérisé en ce que**
dans les profils positifs (10b, 20b, 10'b, 20'b) de plus grande longueur périphérique sont prévues des entailles (5b, 5'b) de plus grande largeur que dans les profils positifs (10a, 20a, 10'a, 20'a) de plus petite longueur périphérique.

2. Bandage pneumatique pour véhicule selon la revendication 1, **caractérisé en ce que** le nombre des entailles (5b, 5'b, 5'c) dans un profil positif (10b, 20b, 10'b, 20'b) de plus grande longueur périphérique coïncide avec le nombre des entailles (5a, 5'a) dans un profil positif (10a, 20a, 10'a, 20'a) de plus petite longueur périphérique.

3. Bandage pneumatique pour véhicule selon la revendication 1, **caractérisé en ce que** le nombre des entailles (5b, 5'b, 5'c) dans un profil positif (10b, 20b, 10'b, 20'b) de plus grande longueur périphérique est supérieur au nombre des entailles (5a, 5'a) dans un profil positif (10a, 20a, 10'a, 20'a) de plus petite longueur périphérique.

4. Bandage pneumatique pour véhicule selon l'une quelconque des revendications 1 à 3, **caractérisé en ce que** les entailles larges (5'b) sont combinées avec les entailles (5'c) de plus petite largeur à l'intérieur d'un profil positif (20'b).
